# EUROPÄISCHE PATENTSCHRIFT

(11) **EP 2 210 296 B1**
(45) Veröffentlichungstag und Bekanntmachung des Hinweises auf die Patenterteilung: **15.08.2012**
(21) Anmeldenummer: 08845047.3
(22) Anmeldetag: 15.10.2008
(51) Int. Cl.: H01M 2/10, H01M 10/42, H01M 10/48, H01M 10/50

(54) **RUNDZELLENAKKUMULATOR**
ROUND CELL BATTERY
BATTERIE D'ACCUMULATEURS CYLINDRIQUES

(30) Priorität: 31.10.2007 DE 102007052330
(43) Veröffentlichungstag der Anmeldung: 28.07.2010
(73) Patentinhaber: Johnson Controls Hybrid and Recycling GmbH, 30419 Hannover (DE)
(72) Erfinder: JOSWIG, Ralf, 29690 Buchholz (DE); WIEGMANN, Martin, 27246 Borstel (DE); BRENNER, Helge, 30451 Hannover (DE)
(74) Vertreter: Günther, Constantin
(86) Internationale Anmeldenummer: PCT/EP2008/008712
(87) Internationale Veröffentlichungsnummer: WO 2009/056224

(56) Entgegenhaltungen:
- EP-A- 1 191 616
- EP-A- 1 237 209
- EP-A- 1 274 137

## Beschreibung

Die Erfindung betrifft einen Rundzellenakkumulator.

Aus der EP 0 917 230 B1 ist eine Akkumulatorenbatterie mit einer Temperiervorrichtung bekannt.

Die DE 10 2004 005 364 A1 beschreibt einen elektrochemischen Energiespeicher.

Die DE 102 23 782 B4 offenbart eine Batterie mit wenigstens einer elektrochemischen Speicherzelle und einer Kühleinrichtung, die von einem flüssigen Kühlmedium durchströmt ist. Die Speicherzellen werden in Öffnungen der Kühleinrichtungen aufgenommen und stehen mit jeweils eine in einer Richtung senkrecht zu der Längsachse der Speicherzelle gekrümmten Außenfläche teilweise in kraftschlüssigem Kontakt. In den Bereichen des kraftschlüssigen Kontaktes ist eine Dehnfuge vorgesehen.

DE 10 2007 009 315 A1 offenbart eine Vorrichtung zur Kühlung elektrischer Elemente mit Leiterkörpern, die zur Ableitung von Wärme mit Seitenflächen der elektrischen Elemente im thermischen Kontakt stehen.

Bei einem elektrischen Akkumulator mit Rundzellen besteht das Problem der Wärmeableitung. Dieses Problem wird dadurch verschärft, dass der Becher der Zelle auf elektrischem Potential liegt.

Aufgabe der vorliegenden Erfindung ist es daher, einen verbesserten Rundzellenakkumulator zu schaffen.

Die Aufgabe wird durch speziell geformte Ableitelemente, z. B. metallische Ableitbleche, gelöst. Die Kontaktaußenfläche der Becher der Rundzellen oder die Kontaktfläche der Ableitelemente sind elektrisch isolierend beschichtet, beispielsweise mit Wärmeleitlack oder spezieller Kunststofffolie. Die isolierenden Ableitelemente können auch aus einem wärmeleitfähigen elektrisch isolierenden Kunststoff hergestellt werden. Der wärmeleitende Kunststoff kann belspielsweise mit Keramik gefüllt sein. Als Keramikfüllung eignet sich beispielsweise Bornitrid.

In die Ableitelemente können Rohre für das Kühlmittel montiert werden, die beispielsweise aus Aluminium oder Stahl gebildet sein können.

Die metallischen Ableitbleche selbst können beispielsweise aus Kupfer oder Aluminiumkühlkörpern geformt sein. Besonders eignet sich die Nutzung von Strangpressteilen.

Alle Kontaktflächen können zur Veriaesserung des Wärmeübergangs mit einer Wärmeleitpaste, einem Wärmeleitgel oder einem Wärmeleitkleber versehen sein. Hierzu eignet sich beispielsweise das Produkt Alphagel der Firme Geltec (http:www.geltecco.jp/english/gel/app_03htm) oder das Produkt Keratherm® der Firma Kerafol (http://kerafol.de).

Die Erfindung wird nachfolgend anhand der beigefügten Zeichnungen näher beschrieben.

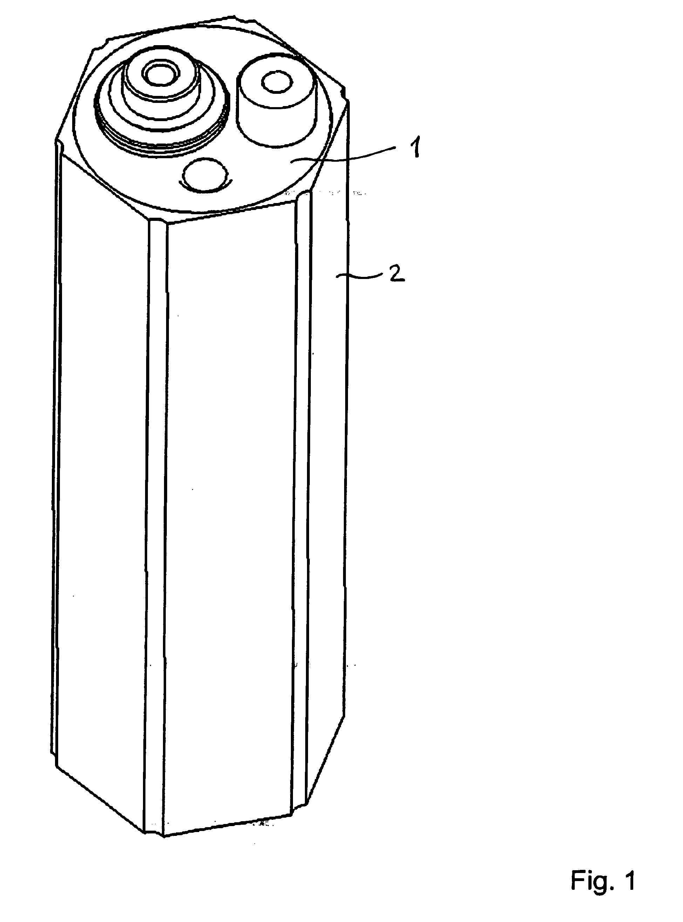

Figur 1 zeigt eine perspektivische Ansicht einer Rundzelle, die in ein sechseckiges Gehäuse 2 eingebaut ist, das einen zylinderförmigen Raum zur Aufnahme der Rundzelle 1 hat. Die Kanten des Gehäuses 2 sind mit Nuten zur Aufnahme von Ableitelementen versehen.

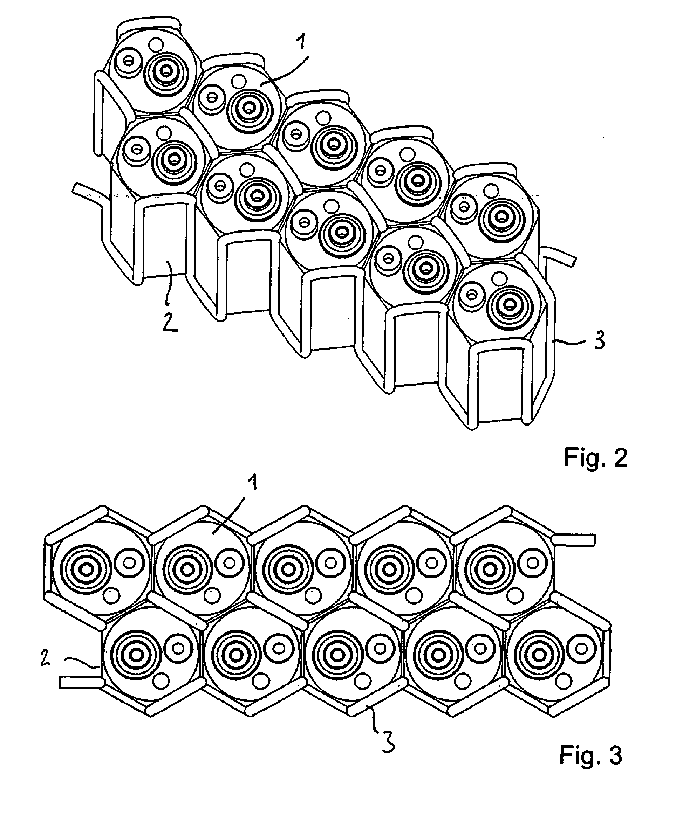

Figur 2 zeigt eine perspektivische Ansicht mit einer Anzahl von angrenzend aneinander angeordneten Rundzellen 1, die in einem jeweiligen Gehäuse 2 aufgenommen sind. Sichtbar sind die Ableitelemente 3, die in Form eines gebogenen Rundstabs ausgebildet sind. Der Rundstab ist so gebogen, dass er entlang einer Unter- oder Oberkante zu einer Seitenkante verläuft, um an einer Ober- bzw. Unterkante überzugehen. Die Ableitelemente 3 haben einen zick-zack-förmigen Verlauf und sind in die Nuten an den Seitenkanten des Gehäuses 2 eingebracht.
Figur 3 lässt eine Draufsicht auf die Rundzellenanordnung aus Figur 2 erkennen.

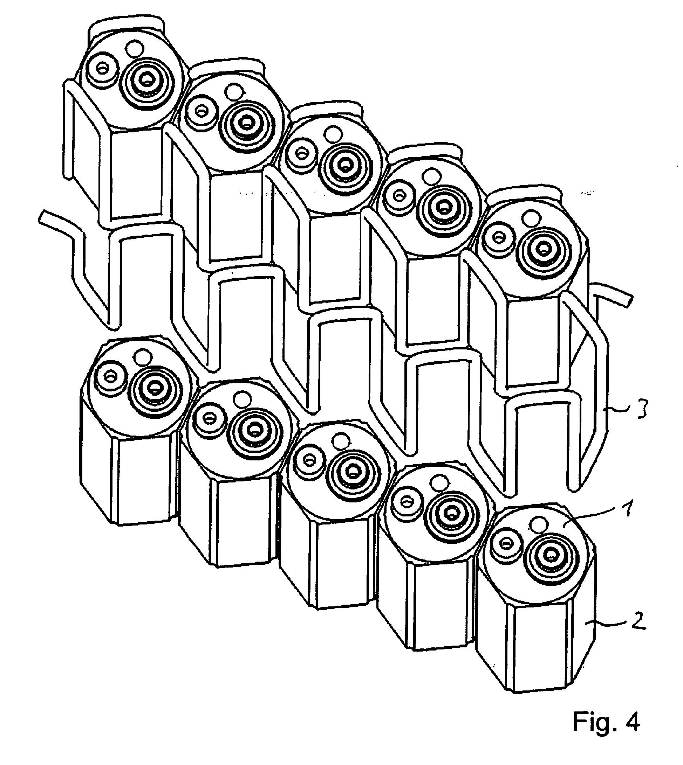

Figur 4 zeigt eine Explosionsansicht, bei der die nebeneinander angeordneten Rundzellen 1 von unten in den durch die zick-zack-förmigen Ableitelemente 3 gebildeten Käfig eingebracht werden.

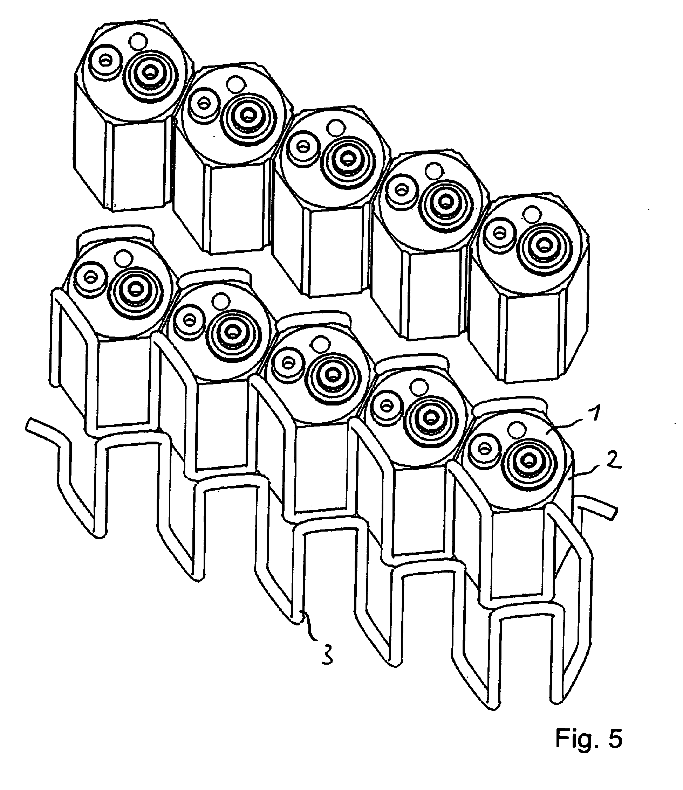

Figur 5 lässt eine entsprechende Ansicht erkennen, bei der die an die jeweiligen Gehäuse 2 angebrachten Rundzellen 1 von oben in den durch die zick-zack-förmigen Ableitelemente gebildeten Käfig eingebracht werden.

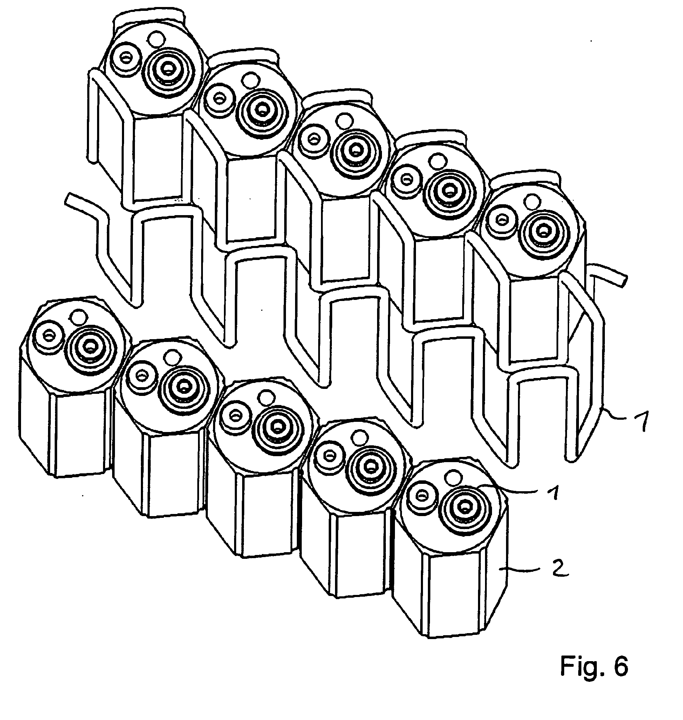

Eine ähnliche Explosionsansicht zeigt Figur 6.

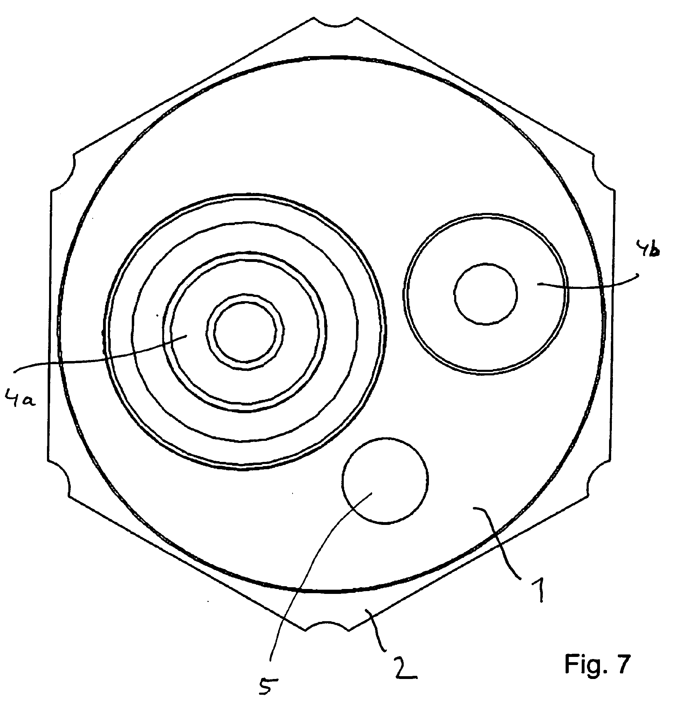

Figur 7 lässt eine Draufsicht auf ein Gehäuse 2 mit darin eingebrachter Rundzelle 1 erkennen. Neben den Polanschlüssen 4a, 4b für den positiven und negativen Pol ist auch ein Entgasungsventil 5 in an sich bekannter Weise vorgesehen.

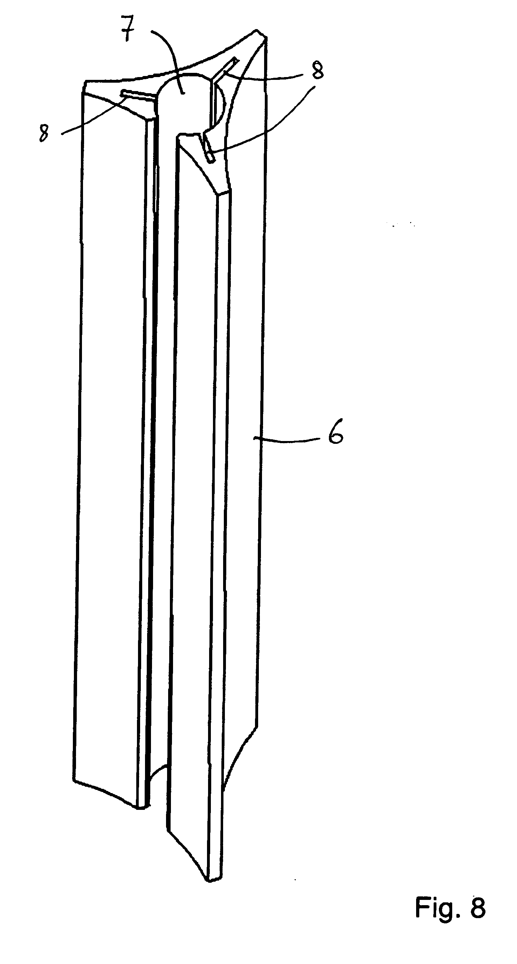

Figur 8 lässt ein aus Strangpressteil hergestelltes metallisches Ableitelement 6 erkennen, das gekrümmte Außenwände hat, an die sich die Außenwände der Rundzellen 1 anschließen. Im Zentrum der Ableitelemente 6 befindet sich eine Bohrung zur Aufnahme der stabförmigen Ableitelemente 3. Radial von den Bohrungen ragen Einschnitte 8 in das Ableitelement 6 hinein, um eine verbesserte Kühlung und Flexibilität zu erzielen.

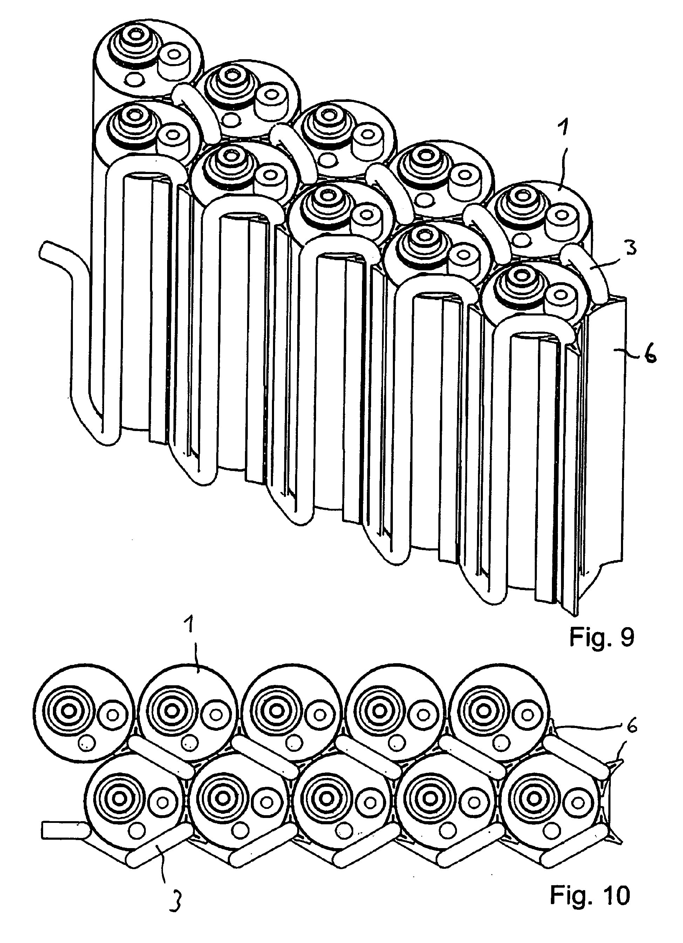

Figur 9 zeigt eine Ausführungsform eines Akkumulators, bei dem die Rundzellen 1 nicht in ein jeweiliges Gehäuse 2 eingesetzt werden, sondern in ein durch die Ableitelemente 6 in Verbindung mit den Rundstäben 3 gebildete Aufnahme.
Figur 10 lässt eine Draufsicht auf die Akkumulatorenanordnung aus Figur 9 erkennen.

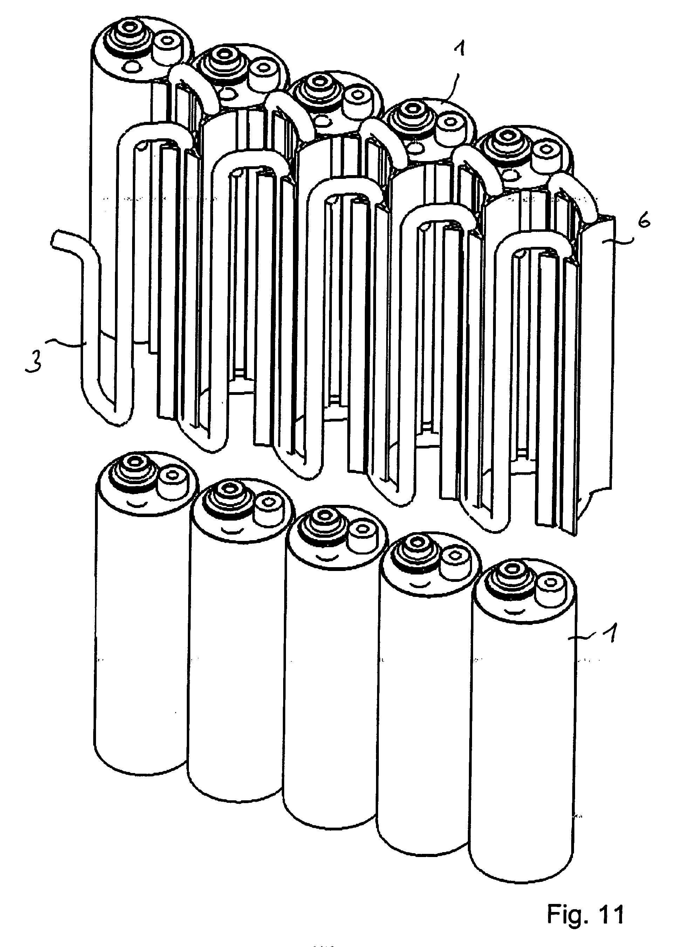

Figur 11 lässt eine Explosionsansicht des Akkumulators erkennen. Deutlich wird, wie die Rundzellen 1 in die durch die stranggepressten Ableitelemente 6, die einen Kühlkörper bilden, und die durch die Ableitelemente 6 geführten Rundstab-Ableitelemente 3 gebildeten Rundzellenaufnahmen eingesteckt werden.

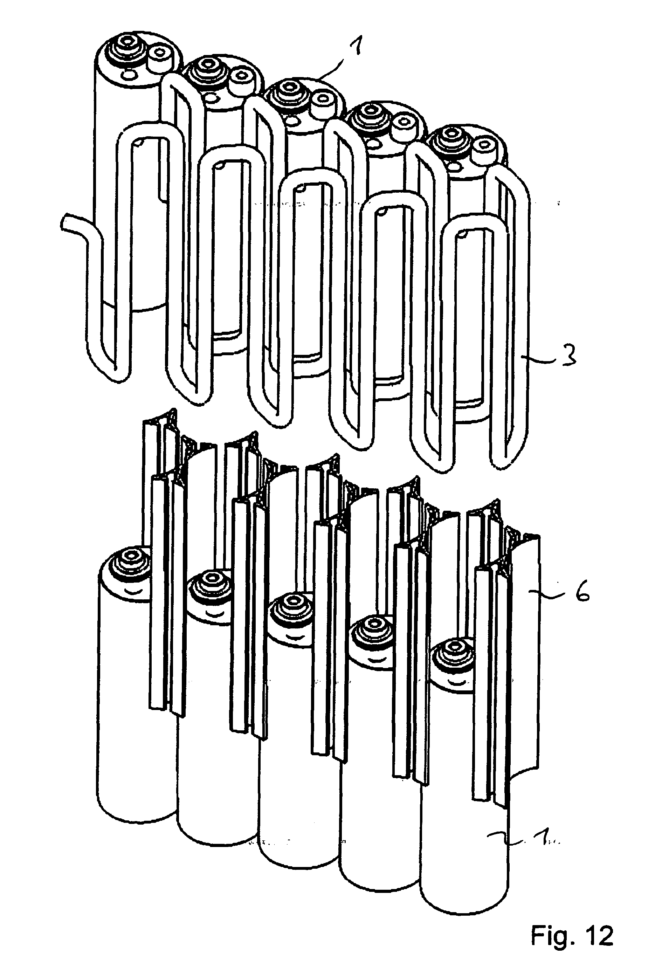

Die Explosionsansicht aus Figur 12 macht dies nochmals deutlicher.

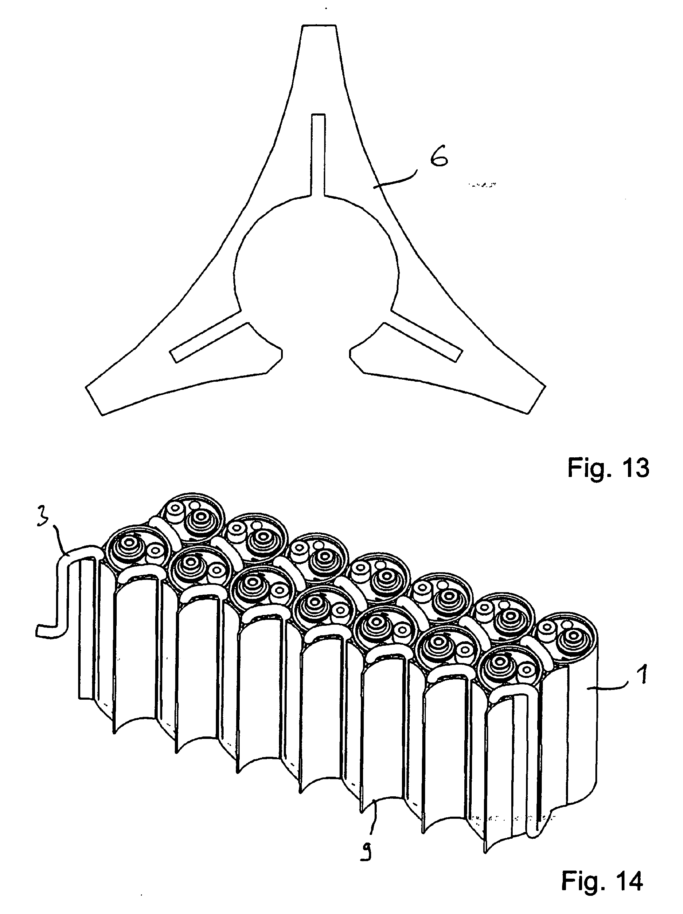

Figur 13 lässt eine Draufsicht auf das Ableitelement 6 aus Figur 8 erkennen.
Figur 14 lässt eine andere Ausführungsform eines Akkumulators erkennen, bei dem ein Ableitelement 9 sich einteilig über eine vorzugsweise gesamte Länge des Akkumulators erstreckt und beispielsweise, wie dargestellt, sieben Akkumulatoren aufnimmt und hierfür entsprechende teilkreisförmige Wände hat.

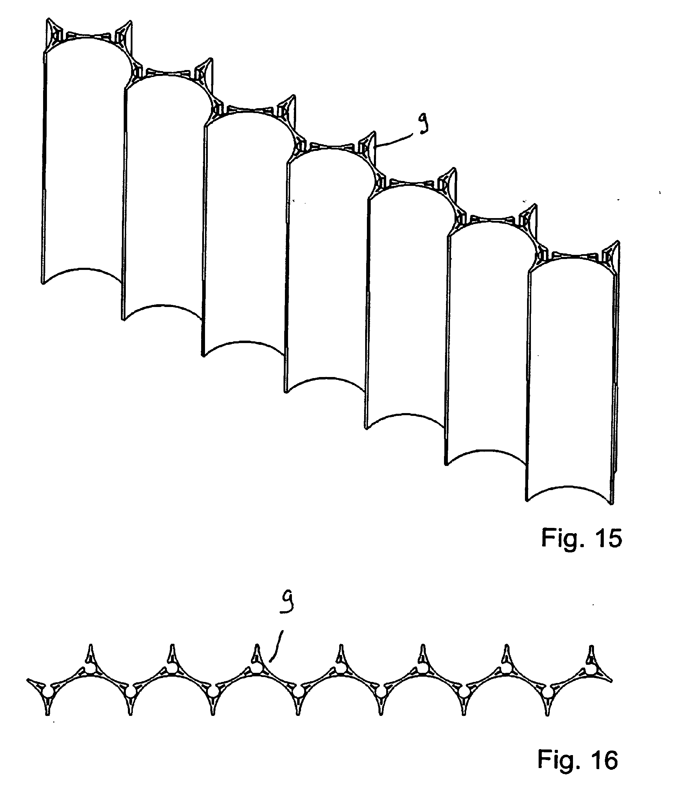

Die Ausführungsform des Ableitelementes 9 ist in der Figur 15 näher ersichtlich. Die Bohrung zur Aufnahme der Rundstab-Ableitelemente 3, und die Einschnitte sind mit dem Ableitelemente 8 der zweiten Ausführungsform vergleichbar.
Figur 16 zeigt eine Draufsicht auf das Ableitelement aus Figur 15.

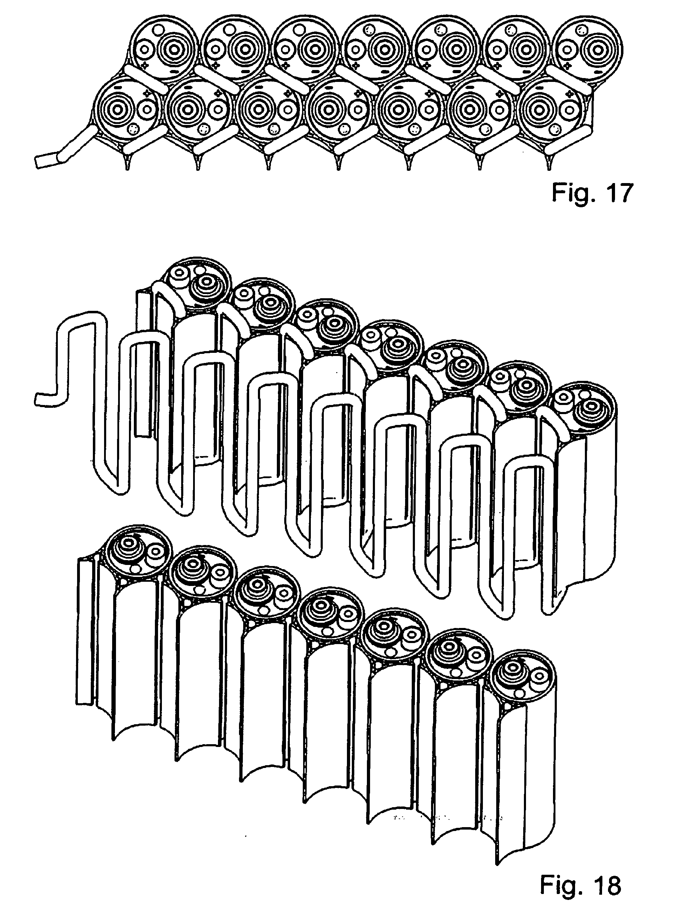

Figur 17 lässt eine Draufsicht auf den Akkumulator im zusammengebauten Zustand erkennen.
Figur 18 zeigte eine Explosionsansicht.

## Patentansprüche

1. Rundzellenakkumulator mit einer Mehrzahl nebeneinander angeordneter Rundzellen, **dadurch gekennzeichnet, dass** mindestens ein elektrisch gegenüber den Rundzellen isoliertes Ableitelement vorgesehen ist, das stabförmig ausgeführt und so gebogen ist, dass das stabförmige Ableitelement zick-zack-förmig abwechselnd jeweils entlang einer Unterseite, einer sich daran anschließenden Seitenwand und einer Oberseite der Rundzellen verläuft und zur Wärmeableitung eine Gruppe von Rundzellen wärmeleitend verbindet.

2. Rundzellenakkumulator nach Anspruch 1, **dadurch gekennzeichnet, dass** die Rundzellen in mindestens ein für eine Gruppe von Rundzellen gemeinsames Ableitaufnahmeelement aufgenommen sind, die eine an die Seitenwand-Oberflächen der Rundzellen angepasste Aufnahmekontur haben, so dass diese Seitenwand-Oberflächen an der Innenwandung eines zugeordneten Ableiteraufnahmeelementes anliegen, wobei die Ableitaufnahmeelemente weiterhin Aufnahmebohrung zur Aufnahme der stabförmigen Ableitelemente haben.

3. Rundzellenakkumulator nach Anspruch 2, **dadurch gekennzeichnet, dass** die an die Rundzellen angrenzenden Innenwandungen der Ableitaufnahmeelemente gekrümmt sind.

4. Rundzellenakkumulator nach Anspruch 2 oder 3, **dadurch gekennzeichnet, dass** radial zu den Aufnahmebohrungen Einschnitte von der Aufnahmebohrung aus in das Ableitaufnahmeelement hineinragen.

5. Rundzellenakkumulator nach Anspruch 1, **dadurch gekennzeichnet, dass** die Rundzellen ein im Querschnitt sechseckiges Gehäuse mit Nuten an den Seitenkanten des Gehäuses zur Aufnahme von Abschnitten des stabförmigen Ableitelementes haben.

6. Rundzellenakkumulator nach einem der vorherigen Ansprüchen, **dadurch gekennzeichnet, dass** das mindestens eine stabförmige Ableitelement und/oder die Ableitaufnahmeelemente aus einem wärmeleitfähigen, elektrisch isolierenden Kunststoff gebildet sind.

7. Rundzellenakkumulator nach einem der Ansprüche 1 bis 5, **dadurch gekennzeichnet, dass** die Kontaktaußenfläche des Rundzellengehäuses, das mindestens eine stabförmige Ableitelement und/oder das Ableitaufnahmeelement mit einer elektrisch isolierenden und wärmeleitfähigen Beschichtung eine an ihrer Kontaktaußenfläche versehen sind.

8. Rundzellenakkumulator nach einem der vorhergehenden Ansprüche, **dadurch gekennzeichnet, dass** das mindestens eine stabförmige Ableitelement und/oder Ableitaufnahmeelement eine Keramikfüllung haben.

## Claims

1. A round cell rechargeable battery having a plurality of round cells which are arranged alongside one another, **characterized in that** at least one output element is provided, which is electrically insulated from the round cells, is in the form of a rod and is curved such that the output element which is in the form of a rod runs in a zigzag-shape alternately in each case along a lower face, a side wall adjacent thereto and an upper face of the round cells and thermally conductively connects a group of round cells, for heat dissipation.

2. The round cell rechargeable battery as claimed in claim 1, **characterized in that** the round cells are held in at least one output holding element which is shared by a group of round cells, which have a holding contour which is matched to the side-wall surfaces of the round cells such that these side-wall surfaces rest on the inner wall of an associated output holding element, wherein the output holding elements also have a holding hole for holding the output elements, which are in the form of rods.

3. The round cell rechargeable battery as claimed in claim 2, **characterized in that** the inner walls adjacent to the round cells of the output holding elements are curved.

4. The round cell rechargeable battery as claimed in claim 2 or 3, **characterized in that** incisions project from the holding hole into the output holding element radially with respect to the holding holes.

5. The round cell rechargeable battery as claimed in claim 1, **characterized in that** the round cells have a housing with a hexagonal cross section, with grooves on the side edges of the housing in order to hold sections of the output element which is in the form of a rod.

6. The round cell rechargeable battery as claimed in one of the preceding claims, **characterized in that** the at least one output element which is in the form of a rod and/or the output holding elements are/is formed from a thermally conductive, electrically insulating plastic.

7. The round cell rechargeable battery as claimed in one of claims 1 to 5, **characterized in that** the contact outer surface of the round cell housing, the at least one output element which is in the form of a rod and/or the output holding element are/is provided with an electrically insulating and thermally conductive coating on their contact outer surface.

8. The round cell rechargeable battery as claimed in one of the preceding claims, **characterized in that** the at least one output element which is in the form of a rod and/or output holding element have/has a ceramic filling.

## Revendications

1. Batterie rechargeable à cellules rondes ayant une pluralité de cellules rondes qui sont disposées le long les unes des autres, **caractérisée en ce qu'**au moins un élément de sortie est prévu, qui est isolé électriquement des cellules rondes, est sous la forme d'une tige et est incurvé de manière à ce que l'élément de sortie qui est sous la forme d'une tige s'étende sous forme de zigzag alternativement dans chaque cas le long d'une face inférieure, le long d'une paroi latérale adjacente à celle-ci et le long d'une face supérieure des cellules rondes et connecte un groupe de cellules rondes de manière conductrice thermiquement, pour la dissipation de la chaleur.

2. Batterie rechargeable à cellules rondes selon la revendication 1, **caractérisée en ce que** les cellules rondes sont maintenues dans au moins un élément de maintien de sortie qui est partagé par un groupe de cellules rondes, qui a un contour de maintien qui est apparié aux surfaces des parois latérales des cellules rondes de manière à ce que les surfaces de ces parois latérales reposent sur la paroi interne d'un élément de maintien de sortie associé, dans laquelle les éléments de maintien de sortie ont aussi un trou de maintien pour maintenir les éléments de sortie, qui sont sous la forme de tiges.

3. Batterie rechargeable à cellules rondes selon la revendication 2, **caractérisée en ce que** les parois internes adjacentes aux cellules rondes des éléments de maintien de sortie sont incurvées.

4. Batterie rechargeable à cellules rondes selon la revendication 2 ou 3, **caractérisée en ce que** des incisions font saillie depuis le trou de maintien dans l'élément de maintien de sortie radialement par rapport aux trous de maintien.

5. Batterie rechargeable à cellules rondes selon la revendication 1, **caractérisée en ce que** les cellules rondes ont un boîtier avec une coupe transversale hexagonale, avec des gorges sur les bords latéraux du boîtier afin de maintenir des sections de l'élément de sortie qui est sous la forme d'une tige.

6. Batterie rechargeable à cellules rondes selon l'une quelconque des revendications précédentes, **caractérisée en ce que** l'au moins un élément de sortie qui est sous la forme d'une tige et/ou les éléments de maintien de sortie est/sont formés à partir d'un plastique électriquement isolant, thermiquement conducteur.

7. Batterie rechargeable à cellules rondes selon l'une quelconque des revendications 1 à 5, **caractérisée en ce que** la surface extérieure de contact du boîtier des cellules rondes, l'au moins un élément de sortie qui est sous la forme d'une tige et/ou l'élément de maintien de sortie est/sont pourvus d'un revêtement électriquement isolant et thermiquement conducteur sur leur surface extérieure de contact.

8. Batterie rechargeable à cellules rondes selon l'une quelconque des revendications précédentes, **caractérisée en ce que** l'au moins un élément de sortie qui est sous la forme d'une tige et/ou l'élément de maintien de sortie ont/a un remplissage en céramique.
